(19) Europäisches Patentamt

European Patent Office

Office européen des brevets

(11) EP 1 705 926 A1

(12) EUROPEAN PATENT APPLICATION

(43) Date of publication:
27.09.2006 Bulletin 2006/39

(51) Int Cl.:
*H04N 7/64* (2006.01)

(21) Application number: 05290650.0

(22) Date of filing: 24.03.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: ALCATEL
75008 Paris (FR)

(72) Inventors:
• **Hoche, Michael Walter
88090 Immenstaad (DE)**

• **Szabo, Peter
75180 Pforzheim (DE)**
• **Rössler, Horst
70794 Filderstadt (DE)**

(74) Representative: **Brose, Gerhard et al**
**Alcatel,**
**Intellectual Property Group, Stuttgart**
**70430 Stuttgart (DE)**

Remarks:
Amended claims in accordance with Rule 86 (2) EPC.

(54) **Failsafe stream processing**

(57) This invention relates to a method for fault-tolerant, reliable stream processing, where a data stream is processed by a processing means for yielding a result data stream, where before the data stream is processed, the data stream is decomposed (fission) (D1, D2) into at least two fission substreams (S1.a, S1.b, S2.a, S2.b), such that each fission sub-stream carries a partial information of said data stream, the data stream is processed by processing the at least two fission sub-streams independently (P.a, P.b) yielding at least two fission result sub-streams (RS1.a, RS1.b, RS2.a, RS2.b), where each fission result sub-stream carries a partial information of the result data stream, and where the at least two fission result sub-streams are composable (C1, C2) (fusion) to the result data stream, such that in case of unavailability of a part of the fission sub-streams the missing information could be interpolated. The invention also relates to an apparatus, a system and a computer software product therfor.

Fig. 2

**Description**

The present invention relates to a method for fault-tolerant, reliable stream processing. The invention also relates to an apparatus, a system and a computer software product therfor.

There is a large class of emerging applications in which data, generated in some external environment, is pushed asynchronously to servers or clients that process this information. Some example applications include sensor networks, location-tracking services, fabrication line management, network management, and streamed media applications. These applications are characterized by the need to process high-volume data streams in a timely and responsive fashion. Many such stream-based applications are naturally distributed, often embedded in an environment with numerous connected computing devices with heterogeneous capabilities. As data travels from its point of origin (e.g., sensors) downstream to applications, it passes through many computing devices, each of which is a potential target of computation. Furthermore, to cope with time-varying load spikes and changing demand, many servers would be brought to bear on the problem. In both cases, distributed computation is the norm.

In "Scalable Distributed Stream Processing", Mitch Cherniack et. al. at the Proceedings of the 2003 CIDR Conference, discloses a Stream Processor capable of simulating data stream processing.

In her dissertation "Stream Based Design of Distributed Systems through Refinement", Annette Stümpel develops a stream based framework for the design of components in distributed systems by stepwise refinement. A distributed system is treated as a network of asynchronously communicating components connected by unidirectional channels. A stream of messages models the communication history on a channel. A stream processing function mapping input histories to output histories describes a component. Each component's whose behavior is specified by a stream processing function.

In "A Unified Data Model for Representing Multimedia, Timeline, and Simulation Data", IEEE Transaction on Knowledge and Data Engineering, Vol. 10, NO. 5, 1998, John David et. al. describe a unified data model that represents multimedia, timeline, and simulation data utilizing a single set of related data modeling constructs. A uniform model for multimedia types structures image, sound, video, and long text data in a consistent way, giving multimedia schemas and queries a degree of data independence even for these complex data types. Information that possesses an intrinsic temporal element can all be represented using a construct called a stream. Streams can be aggregated into parallel multistreams, thus providing a structure for viewing multiple sets of time-based information. The unified stream construct there permits real-time measurements, numerical simulation data, and visualizations of that data to be aggregated and manipulated using the same set of operators.

Even theoretical developments in this area beginning in 1986 with Vaughan Pratt's seminal paper on "Modeling Concurrency with Partial Orders" where concurrency is treated as a stream of actions, i.e. possible execution sequence has been expressed variously in terms of formal languages (typically via the shuffle operator), partial orders, and temporal logic, Kripke structures, inter alia. A single hybrid approach having rich language that mixes algebra and logic and having a natural class of models of streams. Current developments like "Chu Spaces and their Interpretation as Concurrent Objects", Department of Computer Science, Stanford, 2005, treats such streams as a Chu space which is a binary relation from a set to an antiset defined as a set which transforms via converse functions. Chu spaces admit a great many interpretations by virtue of realizing all small concrete categories and most large ones arising in mathematical and computational practice. Of particular interest for computer science is their interpretation as computational processes, which takes the antiset to be a schedule of events distributed in time, set to be an automaton of states forming an information system in the sense of Scott, and the pairs in the relation to be the individual transcriptions of the making of history. The traditional homogeneous binary relations of transition on the states and precedence on schedules are recovered as respectively the right and left residuals of the heterogeneous binary relation with itself. The natural algebra of Chu spaces is that of linear logic, made a process algebra by the process interpretation.

The entire known approaches share a common property, that streams are treated and composed from meaningful objects. The object of the present invention is to enhance stream processing by a new operator allowing decomposing streams. As a side effect it turns out that the application of this operator enhances system up time and the availability and reliability of a large class of streamed media related services.

Former known component redundancy e.g. tandem processing or triple redundant systems, transmission redundancy, e.g. multiple transmission paths, and data redundancy share the disadvantage that all these approaches require at least additional processing resources.

Redundancy is the provision of multiple interchangeable components to perform a single function in order to cope with failures and errors. Redundancy normally applies primarily to hardware. For example, one might install two or even three computers/processes to do the same job. There are several ways these could be used. They could all be active all the time thus giving extra performance through parallel processing as well as extra availability; one could be active and the others simply monitoring its activity so as to be ready to take over if it failed ("warm standby"); the "spares" could be kept turned off and only switched on when needed ("cold standby"). Another common form of hardware redundancy is disk mirroring. Redundancy can also be used to detect and recover from errors, either in hardware or software.

A well-known example of this is the cyclic redundancy check, which adds redundant data to a block in order to detect corruption during storage or transmission. If the cost of errors is high enough, e.g. in a safety-critical system, redundancy may be used in both hardware and software with three separate computers programmed by three separate teams and some system to check that they all produce the same answer, or some kind of majority voting system.

Redundancy within data structures such as streams is the proportion of a message's gross information contents that can be eliminated without losing essential information.

Theoretically, redundancy is one minus the ratio of the actual uncertainty to the maximum uncertainty. This is the fraction of the structure of the message, which is determined not by the choice of the sender, but rather by the accepted statistical rules governing the choice of the symbols in question. Shannon and Weaver, 1948.

Fault Tolerance is the ability of a system or component to continue normal operation despite the presence of hardware or software faults. This often involves some degree of redundancy.

Closely related in "Efficient Algorithm for Optimal Video Transmission", Dexter Kozen et. al., Technical Report TR95-1517, Cornell University, addresses the problem of sending an encoded video stream over a channel of limited bandwidth. When there is insufficient bandwidth available, some data must be dropped. For many video codings, some data is more important than other. In this paper it is suggested to determine a prioritization, which optimizes the visual quality.

Thus the concept of acceptable information lost and information interpolation of lost information is known for the sake of transmission bandwidth.

In the following a stream is an entity representing any kind of not necessarily totally ordered, sequence of entities, or values. These entities or values are called elements of the stream. The sequencing is temporal: elements of a stream entity are distinguished being different instances in time. Streams also have the notion of a current time from which the current element in the sequence can be determined.

A sub stream is a stream that is itself an element or a stream of elements of another stream. They usually break up an overall sequence into semantically meaningful parts. Thus, sub streams permit a stream data model to interact with the temporal evolutionary data. In terms of digital video, a sub stream may be thought of as an individual scene out of an entire video sequence.

The problem of enhancing the reliability and the fault-tolerance of a system is solved by a stream processing, where a data stream is processed for yielding a result data stream, in such a way that before the data stream is processed, the data stream is decomposed via fission into at least two fission sub-streams, such that each fission sub-stream carries a partial information of said data stream, then the data stream is processed by processing the at least two fission sub-streams independently yielding at least two fission result sub-streams, where each fission result sub-stream carries a partial information of the result data stream, and where the at least two fission result sub-streams are composable via fusion to the result data stream, such that in case of unavailability of a part of the fission sub-streams the missing information could be interpolated. Intuitively: the traditional view of a sub stream is the result of a vertical split on the original stream (with start- and end positions). Fission whereas is a *horizontal split* through the original stream (with evaluable parts).

In other words it is suggested to replace the usual recovery mechanism, i.e. the parallel stream processing, where streams are decoupled completely.

Stream fission and fusion is applied for fibered distribution of stream processing such that in case of a failure a partial (degraded) stream processing and result stream (service) remains. The invention is based on three assumptions:

- A system with components each having an operational context, e.g. a fission component (for stream decomposition) and a fusion (stream composing) component for processing two continuous streams.
- A (continuous) stream that is fissionable and fusionable with the property that the stream information could be partly reconstructed from a fission result.
- Preferably a spare system monitoring continuously the operational context and stand in for a processing component in case of a failure.

As already mentioned, fission means the horizontal split of a stream into sub-streams, such that the sub streams carry (slightly degraded) information. Fusion is the inverse function, i.e. the integration or composition of the sub-streams into the origin stream.

Applying fission (decomposition) on streams for distributing them among sub-system and applying fusion (composition) on the result, correspondingly. When a sub-system goes down the degraded service is performed on the remaining processing branches. Preferably, in a second phase a spare sub-system (short a Joker) replaces the failed sub-system. Such that in a maintenance or restauration phase the failed sub-system could be replaced, reinitialized etc., and configured as the new joker. The system remains always available, no system shutdown and no re-boot.

This has the advantage that the network performance and recovering management for streamed media processing is improved. The system is always up and the service is always available and more reliable. System failure causes no system crash, only smooth service degradation for a short time. It is cheap in terms of processing resources, either it costs only the fission and fusion effort and optionally a spare-system since it is shared among multiple equivalent sub-systems. Thus the redundancy concept itself is refined.

The invention has further the advantage that the system could be always up, even in a maintenance phase. Thus components could be replaced in while being operative by the cost of quality degradation.

These and many other objects and advantages of the present invention will become apparent to those of ordinary skill in the art from a consideration of the drawings and ensuing description, where

Fig. 1 shows a schematic drawing of streams and their decomposition according to prior art and according to the invention.

Fig 2 shows a schematic drawing of the principle of the method according to the invention.

Fig. 3 shows a schematic drawing of the principle of the system according to the invention.

Fig 4. shows a schematic drawing of the principle of the system with a joker component according to the invention.

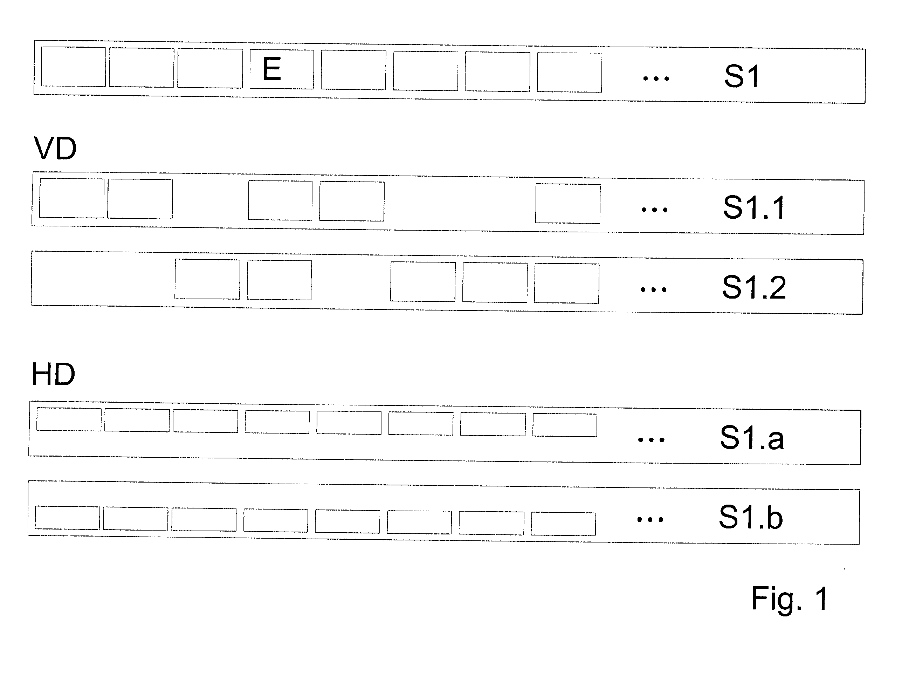

Figure 1 shows several streams S1, S1.1 and S1.2, and S1.a and S1.b. The first stream S1 comprises a sequence of elements E.

This sequence, or more generally the order of elements through the time carries certain information, expressed by a mapping I from the streams to a semantic domain. Furthermore this information has a kind of quality, which is a mapping Q from the semantic domain into an ordered domain, giving each information a quality. For instance consider an MPEG coded stream, carrying the information of a sequence of pictures as information. Quality of such information, in its visual presentation, can be distinguished by factors such as quality of visualization concerning jitter, delay, resolution etc. In this case the quality could be a mapping to a measurement, e.g. empirical values e.g.) of the quality of visualization, 0 = imperceptible, 1 = perceptible, 2 = acceptable, 3 = excellent.

The figure further shows a vertical decomposition VD like the sub streams shown in "A Unified Data Model for Representing Multimedia, Timeline, and Simulation Data" where two sub streams S1.1 and S1.2 aggregate to the first stream S1. The decomposition results from the aggregation information. A flat stream is not decomposable. An example for vertical decomposable stream is a video stream consisting of a sequence of clips. A vertically non-decomposable stream is for instance a plain integer sequence without additional semantics.

And the figure shows a horizontal decomposition HD into two fission sub streams S1.a and S1.b. This decomposition relies not on aggregation information but on the carried information. The requirement for such a split is that each fission sub stream S1.a and S1.b carries about the information of the original stream S1 where information quality degradation is allowed.

Both decompositions are reversible, i.e. the original (decomposed) stream could be reconstructed from the sub streams.

The horizontal decomposition could be expressed by two operators, a fission operator FI, mapping one stream into a sum of sub streams. And a fusion operator FU, mapping the sum of sub streams into one stream, where S = FU (FI(S)).

Consider for instance a stream consisting of coordinates, e.g. from a mouse pointer:

$$S=[(x1, y1);(x2, y2);(x3, y3);(x4, y4);(x5, y5);(x6, y6);(x7, y7);...]$$

Let the fission operator mapping the coordinates with odd indexes to a first fission stream and the one with even index to a second fission stream, i.e.

$$FI(S)=\left\langle \begin{matrix} [(x1,y1);(x3, y3);(x5, y5);(x7, y7);...] \\ [(x2, y2);(x4, y4);(x6, y6);...] \end{matrix} \right\rangle$$

and the corresponding fusion operator FU(S.a, S.b) the inverse operation taking alternately from the fission sub streams coordinates and merging them (in the right order) together in one stream.

The quality of a stream consisting of coordinates is the density of the coordinate information. The information given by one element (x,y) is obviously in the example a position on the screen. Thus the more positions are available, the more precisely the pointer designates. Furthermore the information has to be actual, i.e. the local density is the quality and not an averaged blurs, i.e. a split

$$\left\langle \begin{array}{c} [(x1, y1);(x7, y7);...] \\ [(x2, y2);(x3, y3);(x4, y4);(x5, y5);(x6, y6);...] \end{array} \right\rangle$$

would not be a horizontal decomposition since the first sub stream is of too low quality.

A horizontal decomposition allows the reconstruction of the original information from a part of the fission sub streams with degradation in quality.

In the above example the stream with the odd indexed coordinates as well as the one with the even indexed coordinates would be sufficient for pointing. Even if not, the intermediate coordinates could be interpolated, e.g. by (linear polynomials, splines, etc. since the trace of a pointer could be assumed as continuous.

The fact that partial information, not fragments of information, is carried in a fission sub stream is expressed by the smaller elements forming a sequence without wholes.

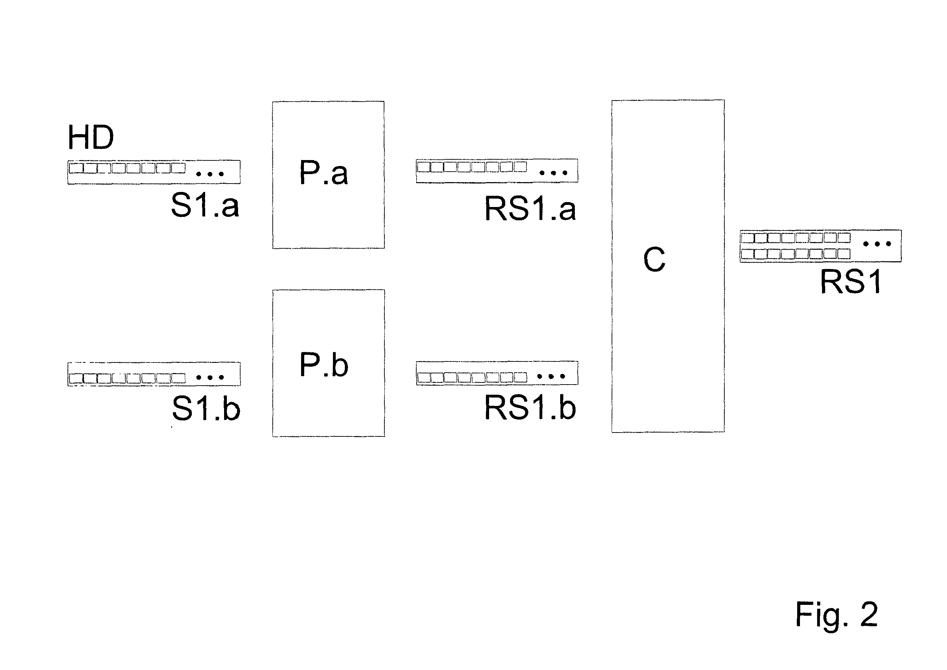

Figure 2 shows an application of the horizontal decomposition. Suppose there is a horizontal decomposition HD into the two shown fission sub streams S1.a and S1.b. Each of the streams is processed, e.g. by a separate process, task, in a separate thread, or even with separate hardware P.a and P.b. The processing yields two resulting fission sub-streams RS1.a and RS1.b. These two streams can be fused into a resulting stream RS1 by another system component C (beside the processing components).

For the moment this looks like a special method for parallel (vector) processing of streams. On closer investigation the increased reliability turns out. The stream processing could be regarded from the following starting point: Having a process P, that transforms a stream S into a result stream RS, i.e. *P(S)= RS.* According to the invention the stream S is horizontally decomposed into a sum (here a pair) of fission sub-streams, i.e. *FI (S)=⟨S.a, S.b⟩,* in the figure S1.a and S1.b. The process mapping P is accordingly split into P.a and P.b. Note that these mappings are fibers of the original mapping P. In the simplest case each stream could be uniformly treated, i.e. P.a = P.b = P. Let the decomposition of P be denoted as *FI (P)=⟨P.a, P.b⟩* and FI(D) = (D1,D2), such that the following constraint is fulfilled: *FU (FI(D)(FI(S)))* *=P(S).* For the example this instances to *RS1=P(S)=FU(⟨P.a(S1.a),P.b(S1.b)⟩).*

This has the effect that whenever a process goes down or a stream becomes corrupt or breaks a result stream with degraded quality remains available. Suppose for instance the fission sub stream S1.b breaks or the process P.b goes down, the following situation occurs: *RS'1=FU(⟨P.a(S1.a),[ ]⟩).* This result stream carries the information of the original RS1, i.e. *I (RS'1)= I (RS1)* but with a lower quality Q(I(RS'1)).

Extending the above example with the coordinate streams of a pointer, the process P could be a linear transformation mapping the coordinates from one coordinate system to another coordinate system. Since this process is point wise, i.e. element wise a simple copy of the transformation for the fission sub stream with the odd indexed coordinates and the one with the even indexed coordinates would do the job.

Contrary, vertical?? decomposition would result in a heavy information deficit.

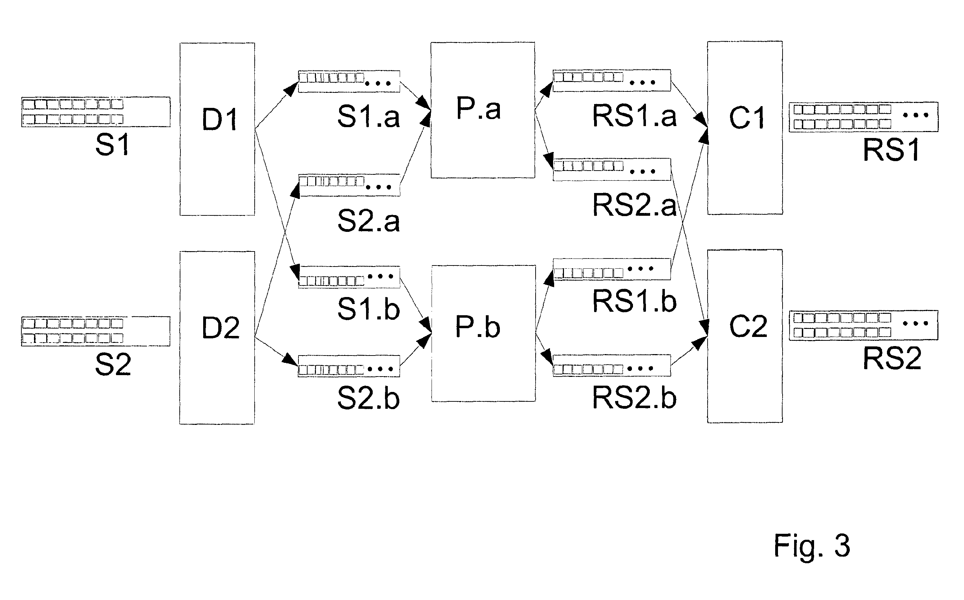

Figure 3 shows an architecture for processing two streams in parallel more reliable without any additional processes (beside fission and fusion). Two streams S1 and S2 have to be processed by a process P yielding to two result streams RS1 and RS2, i.e. $\left\langle \begin{array}{c} RS1 \\ RS2 \end{array} \right\rangle = \left\langle \begin{array}{c} P(S1) \\ P(S2) \end{array} \right\rangle$. The advantageous apparatus according to the invention comprises fission components D1 and D2 and fusion components C1 and C2 for composing the result streams. This is done according to the following schema:

$$\left\langle \begin{array}{c} RS1 \\ RS2 \end{array} \right\rangle = \left\langle \begin{array}{c} FU(\langle P.a(S1.a), P.b(S1.b)\rangle) \\ FU(\langle P.a(S2.a), P.b(S2.b)\rangle) \end{array} \right\rangle \text{ with } \left\langle \begin{array}{c} S1.a \\ S2.b \end{array} \right\rangle = FI(S1)$$

and

$$\left\langle \begin{matrix} S2.a \\ S2.b \end{matrix} \right\rangle = FI(S2).$$

This has the advantage whenever one processing component goes down each the information on the output remains. Contrary would a down-going processor P in the schema $\left\langle \begin{matrix} RS1 \\ RS2 \end{matrix} \right\rangle = \left\langle \begin{matrix} P(S1) \\ P(S2) \end{matrix} \right\rangle$ cause a heavy information loss, i.e. one of the result streams would be beaked or corrupted.

Obviously this stream processing method could combinatorial be generalized in such a way by applying the transformation from $\left\langle \begin{matrix} RS1 \\ RS2 \end{matrix} \right\rangle = \left\langle \begin{matrix} P(S1) \\ P(S2) \end{matrix} \right\rangle$ to $\left\langle \begin{matrix} RS1 \\ RS2 \end{matrix} \right\rangle = \left\langle \begin{matrix} FU(\langle P.a(S1.a), P.b(S1.b)\rangle) \\ FU(\langle P.a(S2.a), P.b(S2.b)\rangle) \end{matrix} \right\rangle$ with

$\left\langle \begin{matrix} S1.a \\ S2.b \end{matrix} \right\rangle = FI(S1)$ and $\left\langle \begin{matrix} S2.a \\ S2.b \end{matrix} \right\rangle = FI(S2)$ inductively, that even compilers would be able to transform any vector like stream processing as the first one in the advantageous second one.

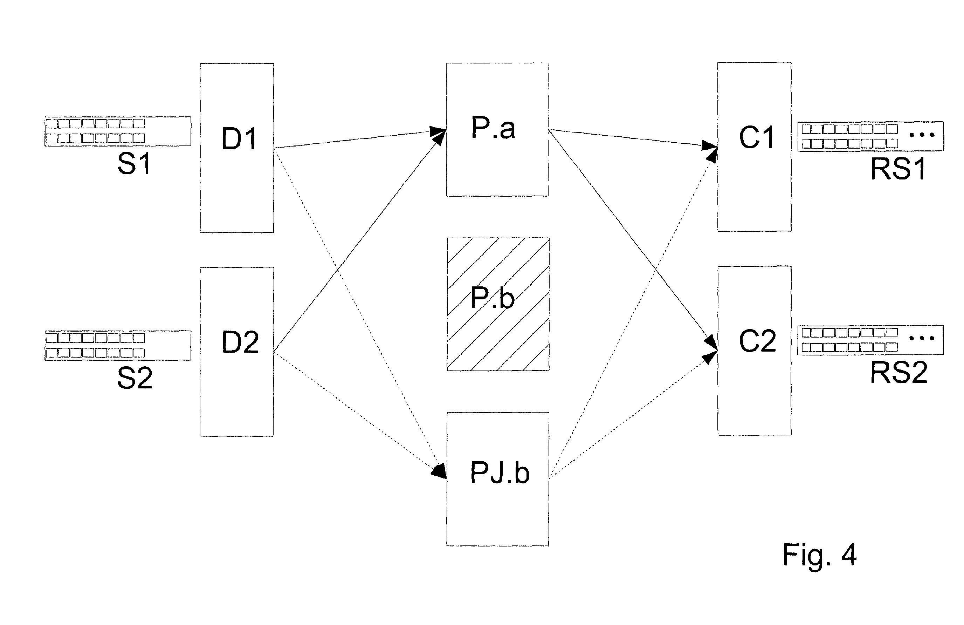

Figure 4 shows an architecture of an apparatus in a preferred embodiment, namely with a Joker component PJ.b. Starting from the architecture shown in the previous figure, the apparatus comprises also the fission components D1 and D2, the fusion components C1, and C2, and the processing components P.a and P.b. The above mentioned two streams S1 and S2 are feed in, and the resulting streams SR1 and SR2 are produced.

As above-mentioned when a processing component goes down, in the picture P.b, the quality of the resulting streams degrade. In order to restore the original operation a recovery procedure is suggested. A spare component, called Joker processor PJ.b is suggested to overtake the task of the malfunction component. In order to replace the malfunction process immediately with the processor a processing context of all (or at least the critical ones) processing components is maintained by the Joker processor. In the case a processor goes down, which could for instance be discovered from a resulting stream, e.g. via checksums or the like as well as from the processor itself e.g. via an alive signal or a watchdog etc.

When a malfunction is discovered the Joker has enough information to invoke himself (or by a dispatcher) into the processing scheme as shown by the dashed arrows. The malfunction effect will only be an (acceptable) short degradation of the quality of the resulting streams. Due to the symmetry of the design, the malfunction component can in a second recovery phase be invoked (when operability is resumed) as a new Joker component.

This means a redundant processor could take over the job of the failure processor, such that the full operative operation returns, as shown in the figure. This distribution principle allows a smooth recovery without complete information loss. Preferably a dispatcher is responsible for adapting the context of a processor. The context switch might take some time but in the intermediate phase only quality degradation instead of complete information loss take place.

The difficulty of processing live streams is twofold. First, robust procedures must be efficient in order to process a stream without delay. Secondly, live stream consumption must be possible even if a processing unit fails. Streams of audio or video provide a good example. They must be processed in real-time and in several cases they are fissionable and fusionable with the property that the stream information is still present even if one sub-stream is missing. Only the quality of the (audio or video) stream is reduced for a short time period until the joker replaces the failed processing component.

A certain class of continuous information like many of audio and video streams have the property that appropriate sub streams (fission streams) even contain information of acceptable quality, such that the information of the origin stream could be (with degradation of quality) be presented / or even reconstructed via interpolation or the like.

The suggested robust solution is based on several assumptions. *Continuous data* (streams) have to allow a fission of the data stream such that, processing only one part of the fission results in a degradation of the quality of the service, but does not destroy the information carried by the data. This kind of disappearing can be continued until the quality of service is unacceptable, i.e. the information is lost. And it has to allow the fusion of the processed parts emerged from the fission such that the result is identical to the output of a process without fission. The property that a fission operator exists is dependent on coding and stream structuring. Note that the process fibers might need context of other processes. In such cases it might be necessary that the processes interact.

Another weak requirement is that the retrieved stream data is delay-able, i.e. an original stream might be reconstructed (with degradation) from partial fission streams. This requirement ensures, that requests to retrieve data from a server can be delayed and/or retried until a subsystem which processes the part of a fission is replaced by another sub-system.

In case of a plurality of equivalent sub-systems with different operational context, e.g. Vector computers etc., the plurality could be divided in equivalence classes, which share the operational context based on a fission/fusion strategy. Within one of these equivalence classes the sub-systems are capable of taking over the provided services, i.e. a sub-system can substitute another sub-system by finding the entry point into the fission/fusion processing. This might be done in the following way:

(0) Share operational context due to a suitable fission/fusion strategy among sub-systems in the same equivalence class. The Joker maintains a data model of all sub-systems in operation.

In case of a sub-system failure

(1) Detect sub-system service failure by the sub-systems in the same equivalence class.

(2) Ignore the failed sub-system service by the fusion process which results in service degradation (stream with gaps)

(3) Exchange the failed sub-system with the Joker

(4) Take over the failed sub-system service from the sub-systems in the same equivalence class by the Joker

(5) Request sub-system maintenance (e.g. exchange or re-start sub-system). If a new one replaces the failed sub-system, this system will be configured as a Joker.

A real life example for a Joker application might be the above stream of mouse positions example. When one sub-stream stream disappears the missing intermediate points are interpolated until the joker process recovers the stream.

Another example is a video transmission to a mobile where the frames have to be squeezed to a suitable display format. The squeeze operation commutes with the fission and fusion. Thus the squeezed fusion of fission streams is similar to the fusion of squeezed fission streams. If a part disappears, the rendering engine displays smoothly the remaining frames.

Similarly the invention is applicable due to the generality in any dense stream-processing device like a network gateway, e.g. a voice over Internet protocol gateway or a media server like a video server since usual media streams allow fission operation and quality degradation, e.g. the ignorance of higher order values in the frequency spectrum of such information.

**Claims**

**1.** A method for fault-tolerant, reliable stream processing, where a data stream is processed by a processing means for yielding a result data stream, the method is **characterized in that**,

- before the data stream is processed, the data stream is decomposed (fission) (D1, D2) into at least two fission sub-streams (S1.a, S1.b), such that each fission sub-stream carries a partial information of said data stream,
- the data stream is processed by processing the at least two fission sub-streams independently (P.a, P.b) yielding at least two fission result sub-streams (RS1.a, RS1.b),
- where each fission result sub-stream carries a partial information of the result data stream, and
- where the at least two fission result sub-streams are composable (C, C1, C2) (fusion) to the result data stream, such that in case of unavailability of a part of the fission sub-streams the missing information could be interpolated.

**2.** The method according to claim 1, **characterized in that**, the unavailability of a part of the at least two fission sub-streams triggers a recovery of stream processing of the unavailable fission streams.

**3.** The method according to claim 3, **characterized in that**, the recovery of the stream processing is performed by a spare system maintaining a processing context for processing the at least two fission sub-streams.

**4.** The method according to claim 1, **characterized in that**, a fission stream is partially redundant encoded for interpolating missing information.

**5.** An apparatus or a system adapted to process data streams fault-tolerant and reliable, the apparatus comprising processing means for data stream processing (P.a, P.b), the apparatus or the system is **characterized by**,

- comprising generating means(D1, D2) for generating at least two fission sub-streams (S1.a, S1.b), where the at least two fission sub-streams is a decomposition of a data stream, such that each fission sub-stream carries a partial information of said data stream, and
- the processing means (P.a, P.b) are adapted to process the at least two fission sub-streams (S1.a, S1.b) independently yielding at least two fission result sub-streams (RS1.a, RS1.b), where each fission result sub-stream carries a partial information of the result data stream, and where the at least two fission result sub-streams are composable (fusion) to the result data stream, such that in case of unavailability of a part of the fission sub-streams the missing information could be interpolated.

**6.** The apparatus or the system according to claim 5, **characterized by** further comprising detection means for detecting the unavailability of a part of the at least two fission sub-streams that is able to trigger a recovery of a stream processing of the unavailable fission streams.

**7.** The apparatus or the system according to claim 6, **characterized by** further comprising a spare system-component (PJ.b) that is adapted to perform the recovery of the stream processing and that is adapted to maintain a processing context for processing the at least two fission sub-streams.

**8.** The apparatus or the system according to claim 5, 6, or 7, **characterized by** comprising fission means for decomposing a data stream into at least two fission sub-streams or by comprising fusion means (C, C1, C2) for composing at least two fission sub-streams to a data stream.

**9.** The apparatus or the system according to claim 5, 6, 7, or 8, being a media stream processing network node like a media server, a media gateway, a base station or a network client.

**10.** A computer software product for fault-tolerant and reliable stream processing, **characterized by**, comprising programming means for carrying out the method according to claim 1.


**Amended claims in accordance with Rule 86(2) EPC.**

**1.** A method for fault-tolerant, reliable stream processing, where a data stream is processed by a processing means for yielding a result data stream, the method comprising the steps of

- before the data stream is processed, the data stream is split into at least two sub-streams, the data streams is processed by processing the at least two sub-streams, and the result streams are merged, **characterized in that** the data stream is split by decomposing it (fission) (D1, D2) into at least two fission sub-streams (S1.a, S1.b), such that each fission sub-stream carries a partial information of said data stream.
- the data stream is processed by processing the at least two fission sub-streams independently (P.a, P.b) yielding at least two fission result sub-streams (RS1.a, RS1.b),
- where each fission result sub-stream carries a partial information of the result data stream, and
- where the at least two fission result sub-streams are composable (C, C1, C2) (fusion) to the result data stream, such that in case of unavailability of a part of the fission sub-streams the missing information could be interpolated.

**2.** The method according to claim 1, **characterized in that**, the unavailability of a part of the at least two fission sub-streams triggers a recovery of stream processing of the unavailable fission streams.

**3.** The method according to claim 3. **characterized in that**, the recovery of the stream processing is performed by a spare system maintaining a processing context for processing the at least two fission sub-streams.

**4.** The method according to claim 1, **characterized in that**, a fission stream is partially redundant encoded for interpolating missing information.

**5.** An apparatus or a system adapted to process data streams fault-tolerant and reliable, the apparatus comprising processing means for data stream processing (P.a, P.b), the apparatus or the system is **characterized by,**

- comprising generating means(D1, D2) for generating at least two fission sub-streams (S1.a, S1.b), where the at least two fission sub-streams is a decomposition of a data stream, such that each fission sub-stream carries a partial information of said data stream, and
- the processing means (P.a, P.b) are adapted to process the at least two fission sub-streams (S1.a, S1.b) independently yielding at least two fission result sub-streams (RS1.a, RS1.b), where each fission result sub-stream carries a partial information of the result data stream, and where the at least two fission result sub-streams are composable (fusion) to the result data stream, such that in case of unavailability of a part of the fission sub-streams the missing information could be interpolated.

**6.** The apparatus or the system according to claim 5, **characterized by** further comprising detection means for detecting the unavailability of a part of the at least two fission sub-streams that is able to trigger a recovery of a stream processing of the unavailable fission streams.

**7.** The apparatus or the system according to claim 6, **characterized by** further comprising a spare system-component (PJ.b) that is adapted to perform the recovery of the stream processing and that is adapted to maintain a processing context for processing the at least two fission sub-streams.

**8.** The apparatus or the system according to claim 5, 6, or 7, **characterized by** comprising fission means for decomposing a data stream into at least two fission sub-streams or by comprising fusion means (C, C1, C2) for composing at least two fission sub-streams to a data stream.

EP 1 705 926 A1

E ··· S1

VD

··· S1.1

··· S1.2

HD

··· S1.a

··· S1.b

Fig. 1

Fig. 2

EP 1 705 926 A1

Fig. 3

Fig. 4

EP 1 705 926 A1

European Patent
Office

**EUROPEAN SEARCH REPORT**

Application Number

EP 05 29 0650

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | CHUNG D-M ET AL: "MULTIPLE DESCRIPTION IMAGE CODING USING SIGNAL DECOMPOSITION AND RECONSTRUCTION BASED ON LAPPED ORTHOGONAL TRANSFORMS" IEEE TRANSACTIONS ON CIRCUITS AND SYSTEMS FOR VIDEO TECHNOLOGY, IEEE INC. NEW YORK, US, vol. 9, no. 6, September 1999 (1999-09), pages 895-908, XP000848854 ISSN: 1051-8215 * the whole document * | 1-10 | H04N7/64 |
| A | M.. CHERNIACK AND AL.: "Scalable Distributed Stream Processing" PROCEEDINGS OF THE CONFERENCE FOR INNOVATIVE DATABASE RESEARCH (CIDR), January 2003 (2003-01), XP002340380 Asilomar, Canada * abstract * * paragraph [06.3] * | 1-10 | |
| A | US 2002/116715 A1 (APOSTOLOPOULOS JOHN G) 22 August 2002 (2002-08-22) * abstract; figure 11 * * paragraph [0083] * | 1-10 | TECHNICAL FIELDS SEARCHED (Int.Cl.7) H04N |

The present search report has been drawn up for all claims

| Place of search | Date of completion of the search | Examiner |
|---|---|---|
| The Hague | 29 August 2005 | Renault, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 05 29 0650

This annex lists the patent family members relating to the patent documents cited in the above-mentioned European search report.
The members are as contained in the European Patent Office EDP file on
The European Patent Office is in no way liable for these particulars which are merely given for the purpose of information.

29-08-2005

| Patent document cited in search report | Publication date | Patent family member(s) | | Publication date |
|---|---|---|---|---|
| US 2002116715  A1 | 22-08-2002 | EP<br>JP<br>WO | 1360839  A2<br>2005507569  T<br>02067588  A2 | 12-11-2003<br>17-03-2005<br>29-08-2002 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MITCH CHERNIACK.** Scalable Distributed Stream Processing. *Proceedings of the 2003 CIDR Conference*
- **JOHN DAVID.** A Unified Data Model for Representing Multimedia, Timeline, and Simulation Data. *IEEE Transaction on Knowledge and Data Engineering,* 1998, vol. 10 (5
- Chu Spaces and their Interpretation as Concurrent Objects. *Department of Computer Science,* 2005
- Efficient Algorithm for Optimal Video Transmission. **DEXTER KOZEN.** Technical Report TR95-1517. Cornell University